# EUROPÄISCHE PATENTSCHRIFT

(11) **EP 0 632 050 B1**
(45) Veröffentlichungstag und Bekanntmachung des Hinweises auf die Patenterteilung: **20.01.1999**
(21) Anmeldenummer: 94109957.4
(22) Anmeldetag: 28.06.1994
(51) Int. Cl.: C07F 9/6571

(54) **Verfahren zur Herstellung von 6H-Dibenz-(c,e)(1,2)-oxaphosphorin-6-on**
Process for preparing 6H-dibenz-(c,e)(1,2)-oxaphosphorin-6-one
Procédé de préparation de 6H-dibenz-(c,e)(1,2)-oxaphosphorin-6-one

(30) Priorität: 03.07.1993 DE 4322168
(43) Veröffentlichungstag der Anmeldung: 04.01.1995
(73) Patentinhaber: Clariant GmbH, 65929 Frankfurt am Main (DE)
(72) Erfinder: Kleiner, Hans-Jerg, Dr., D-61476 Kroberg/Ts (DE)

(56) Entgegenhaltungen:
- DE-A- 2 034 887
- DE-A- 2 730 371
- ZH. OBSHCH. KHIM. (ZOKHA4);72; VOL.42 (1); PP.93-6, USSR Chernyshev E A et al 'Organophosphorus heterocyclic compounds. III. Synthesis and reactions of 10-chloro-9,10-dihydro-10-pho spha-9-oxaphenanthrene [6-chloro-6H-dibenz [c,1][1,2]oxaphosphorin]'
- CHEMICAL ABSTRACTS, vol. 103, no. 11, 16. September 1985, Columbus, Ohio, US; abstract no. 088080, 'Cyclic organophosphorus compounds' & JP-A-8 542 391 (SANKO KAIHATSU KAGAKU KENKYUSHO;JAPAN ) 6. März 1985
- CHEMICAL ABSTRACTS, vol. 077, no. 23, 4. Dezember 1972, Columbus, Ohio, US; abstract no. 152357, SAITO T 'Organophosphorus compounds' & JP---7 216 436 (SANKO CHEMICAL CO., LTD.) 1. September 1972

## Beschreibung

Die vorliegende Erfindung betrifft ein verbessertes Verfahren zur Herstellung von 6H-Dibenz-[c,e][1,2]-oxaphosphorin-6-on der Formel (I) 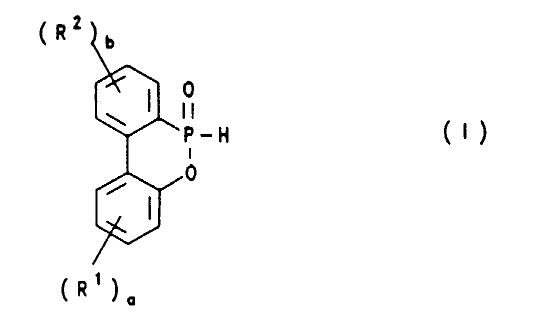 6H-Dibenz-[c,e][1,2]-oxaphosphorin-6-on stellt ebenso wie seine kernsubstituierten Derivate ein bedeutendes Zwischenprodukt zur Herstellung von flammhemmenden Mitteln dar (vergleiche auch DE-PS 26 46 218, DE-PS 27 30 371 und DE-PS 29 20 718). Die vorstehend genannten Oxaphosphorin-6-one lassen sich auch als Promotoren in Polymerisationsprozessen (siehe EP-A-0 454 462) verwenden.

Es ist bekannt, 6H-Dibenz-[c,e][1,2]-oxaphosphorin-6-on ausgehend von 6-Chlor-(6H)-dibenz-[c,e][1,2]-oxaphosphorin herzustellen. Die hierfür benötigten 6-Chlor-(6H)-dibenz-[c,e][1,2]-oxaphosphorine (II) lassen sich durch Umsetzung entsprechender o-Phenylphenole mit PCl₃ (siehe DE-PS 27 30 371 und DE-PS 26 34 887) gewinnen.

Entsprechend dem Beispiel 1 der DE-PS 27 30 371 wird 6-Chlor-(6H)-dibenz-[c,e][1,2]-oxaphosphorin mit überschüssigem Wasser hydrolysiert, wobei man, bezogen auf die Stöchiometrie der Umsetzung, mehr als 100 %ig Überschuß an Wasser einsetzt. Dadurch erhält man zwangsweise Abwässer, die in hohem Maße mit Salzsäure belastet sind. Derartige Abwässer sind nicht nur wegen ihrer korrosiven Eigenschaften unerwünscht, sondern bereiten auch in der Stufe der Entsorgung Schwierigkeiten.

Die Hydrolyse von 6-Chlor-(6H)-dibenz-[c,e][1,2]-oxaphosphorin mit Wasser führt jedoch nicht ausschließlich zur Bildung von 6H-Dibenz-[c,e][1,2]-oxaphosphorin-6-on. Um die damit verbundenen Schwierigkeiten zu vermeiden, empfiehlt die JP-47-16436 - wie nachstehend genauer erläutert wird - die Hydrolyse mit einem Überschuß an Wasser durchzuführen und aus dem dabei anfallenden Reaktionsprodukt anschließend Wasser abzuspalten.

Die Hydrolyse des 6-Chlor-(6H)-dibenz-[c,e][1,2]-oxaphosphorins läuft, wie folgt, ab (siehe auch Gleichungen (4) und (5) der JP-47-16436): 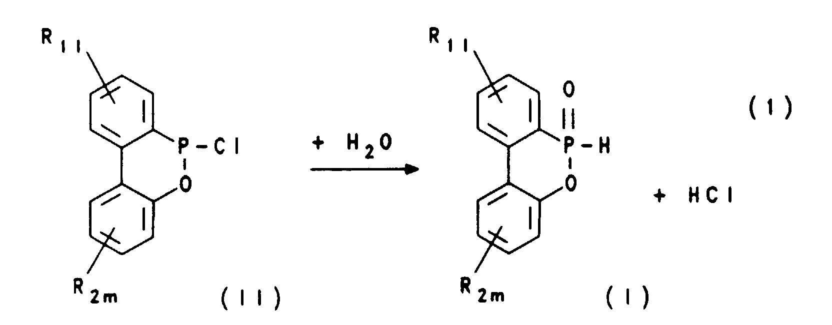 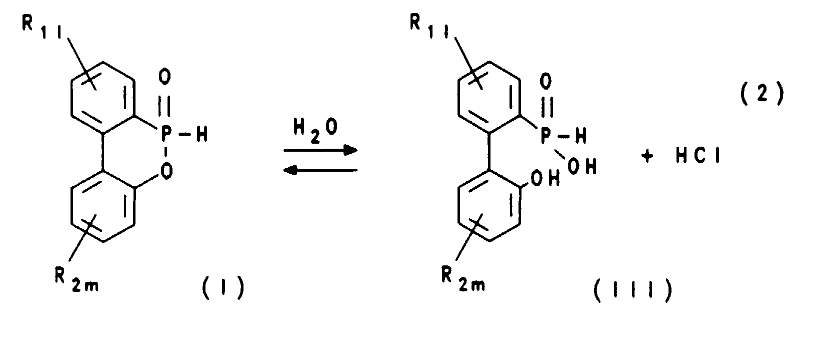 (R₁ und R₂ stehen beispielsweise für Halogen, für eine Allyl- oder Alkylgruppe und l und m für eine ganze Zahl zwischen 0 bis 4.)

Zunächst bildet sich aus dem 6-Chlor-(6H)-dibenz-[c,e][1,2]-oxaphosphorin (II) unter irreversibler Abspaltung von HCl das entsprechende 6H-Dibenz-[c,e][1,2]-oxaphosphorin-6-on (I) [Gleichung (1)], das jedoch gemäß Gleichung (2) mit Wasser rasch zu der entsprechenden Phosphinsäure (III) weiterreagiert. Aus diesem Grund ist es sehr schwierig, die Hydrolyse auf der Stufe des 6H-Dibenz-[c,e][1,2]-oxaphosphorin-6-ons abzufangen. Daher wird gemäß der Lehre der JP-47-16436 empfohlen, die Hydrolyse mit einem Wasserüberschuß durchzuführen und die hierbei gebildete Phosphinsäure (III) abzutrennen, um diese in einem separaten Schritt unter Abspaltung von Wasser in das entsprechende 6H-Dibenz-oxaphosphorin zu überführen. Hierzu schmilzt man (III) und entfernt das sich bildende Wasser unter Anlegen eines Vakuums.

Das in der JP-47-16436 beschriebene Verfahren ist nicht nur recht aufwendig und technisch schwer zu handhaben, sondern führt auch - wie bereits im Zusammenhang mit der DE-PS 27 30 371 erwähnt - zwangsweise zu einem Anfall Salzsäure enthaltender Abwässer.

Es bestand daher ein Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglich macht.

Diese Aufgabe wird überraschenderweise gelöst durch ein Verfahren zur Herstellung von 6H-Dibenz-[c,e][1,2]-oxaphosphorin-6-on der Formel 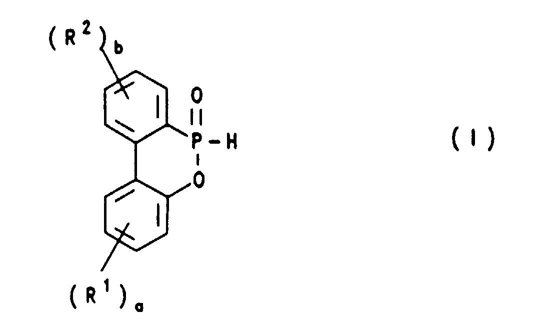 worin R¹ und R² gleich oder verschieden sind und für Halogen, eine Alkyl- oder Alkoxy-Gruppe mit 1 bis 6 Kohlenstoffatomen stehen und a und b gleich oder verschieden sind und für 0, 1, 2 oder 3 stehen. Es ist dadurch gekennzeichnet, daß man ein 6-Chlor-(6H)-dibenz-[c,e][1,2]-oxaphosphorin der Formel 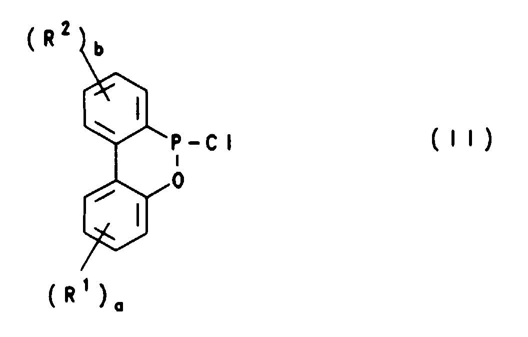 worin R¹, R², a und b die vorstehende Bedeutung haben, mit Wasser, im Molverhältnis 1:1 bei 50 bis 250°C, gegebenenfalls in Anwesenheit eines Lösungsmittels, umsetzt und gasförmigen Chlorwasserstoff in dem Maße, wie er gebildet wird, abtrennt.

Unter Halogen ist Chlor oder Brom zu verstehen. Als Beispiele für Alkylgruppen sind Methyl-, Ethyl-, n-Propyl-, i-Propyl-, n-Butyl-, i-Butyl-, n-Pentyl-, i-Pentyl-, 3-Methylbutyl-, n-Hexyl- oder i-Hexylreste zu nennen.

Beispiele für Alkoxygruppen sind Methoxy-, Ethoxy-, Propoxy-, Butoxy-, Pentoxy- und Hexoxyreste.

R¹ und R² stehen insbesondere für Chlor, eine Alkylgruppe mit 1 bis 4 Kohlenstoffatomen oder eine Alkoxygruppe mit 1 bis 4 Kohlenstoffatomen.

a und b bedeuten, voneinander unabhängig, eine ganze Zahl zwischen 0 bis 3, insbesondere 0, 1 oder 2, bevorzugt 0 oder 1.

Das Verfahren eignet sich gut zur Herstellung von Verbindungen der Formel (I) worin a und b gleich sind und jeweils für 0 oder 1, insbesondere für 0 stehen.

Die Umsetzung läuft bereits bei relativ niedrigen Temperaturen ab, jedoch empfiehlt es sich, bei erhöhten Temperaturen zu arbeiten, um nicht vergleichsweise lange Reaktionszeiten in Kauf nehmen zu müssen. In vielen Fällen genügt es, die Umsetzung bei 70 bis 200°C, insbesondere 100 bis 180°C durchzuführen.

Man kann die Reaktion in Abwesenheit eines Lösungsmittels ablaufen lassen. In einer Reihe von Fällen kann es jedoch auch sinnvoll sein, ein geeignetes Lösungsmittel in die Reaktion einzusetzen.
Geeignete Lösungsmittel sind beispielsweise aromatische Verbindungen, insbesondere aromatische Kohlenwasserstoffe.
Gut geeignet als Lösungsmittel sind Toluol, o-Xylol, m-Xylol, p-Xylol, Ethylbenzol, Chlorbenzol, Dichlorbenzol oder Mischungen dieser Solventien, insbesondere Toluol, o-Xylol, m-Xylol, p-Xylol, Chlorbenzol oder Mischungen derselben.

Zur Durchführung des erfindungsgemäßen Verfahrens vermischt man das Einsatzmaterial (II) und Wasser im Molverhältnis 1:1 unter intensiver Rührung bei der angegebenen Temperatur. Besonders günstig gestaltet sich das erfindungsgemäße Verfahren, indem man das 6-Chlor-(6H)-dibenz-[c,e][1,2]-oxaphosphorin (II) vorlegt und das Wasser (im Molverhältnis 1:1) unter guter Vermischung bei der angegebenen Reaktionstemperatur, gegebenenfalls in Anwesenheit eines Lösungsmittels, zusetzt. Zur Durchführung des Verfahrens genügt es, Wasser lediglich in stöchiometrischer Menge zuzusetzen. Ein Einsatz von Wasser über das Molverhältnis 6-Chlor-(6H)-dibenz-[c,e][1,2]-oxaphosphorin:Wasser = 1:1 hinaus ist überraschenderweise nicht erforderlich.

Im Verlauf der Umsetzung tritt gasförmiger Chlorwasserstoff aus, der in dem Maße, wie er sich bildet, abgeführt und gegebenenfalls zu einer konzentrierten Salzsäure verarbeitet werden kann oder mittels einer wäßrigen Lauge oder der wäßrigen Lösung eines Amins absorbiert wird. Das Abgasen des Chlorwasserstoffs kann auf einfache Weise durch Einleiten eines inerten Gases, beispielsweise Stickstoff, recht wirksam unterstützt werden. Auf das Einleiten eines inerten Gases kann auch verzichtet werden. In diesem Falle kann das Austreten des Chlorwasserstoff gegebenenfalls durch Anlegen eines Vakuum begünstigt werden. Es ist jedoch auch möglich, auf die Anwendung eines Vakuums zu verzichten und den gasförmigen Chlorwasserstoff bei Normaldruck zu entfernen.

Es ist überraschend, daß unter den Reaktionsbedingungen der Chlorwasserstoff nahezu quantitativ entfernt werden kann und das Endprodukt lediglich geringe Mengen Chlorwasserstoff enthält.
Ferner ist es als überraschend anzusehen, daß bei den angegebenen Reaktionstemperaturen keine Zersetzungen stattfinden und zudem das gewünschte Endprodukt der Formel (I) als einziges Reaktionsprodukt auftritt, obgleich nach Lehre der JP-47-16436 eine Bildung der entsprechenden Phosphinsäure (III) neben nicht umgesetztem Einsatzstoff (I) zu erwarten gewesen wäre.

Das anfallende Rohprodukt enthält < 0,1 % Chlorwasserstoff und ist bereits rein genug (Reinheitsgrad mindestens 95 %), um in einer Vielzahl von Fällen unmittelbar, das heißt ohne zusätzliche Reinigung, weiterverarbeitet zu werden.

Das erfindungsgemäße Verfahren läßt sich sowohl kontinuierlich als auch diskontinuierlich ausüben.

Die nachfolgenden Beispiele erläutern das Verfahren, ohne es zu beschränken.

### Experimenteller Teil

### Beispiel 1 (mit Lösungsmittel)

2800 g (11,94 mol) 6-Chlor-(6H)-dibenz-[c,e][1,2]-oxaphosphorin werden mit 2200 ml Toluol vorgelegt und unter intensiver Rührung auf 70°C erwärmt.

Anschließend setzt man innerhalb von etwa 6 Stunden 215 g (11,94 mol) Wasser zu. Dabei gast der anfallende Chlorwasserstoff zum Teil ab. Danach wird die Temperatur schrittweise bis zum Rückfluß erhöht und solange aufrechtgehalten, bis kein Chlorwasserstoff mehr entweicht (Dauer 9 bis 10 Stunden). Man versetzt das Reaktionsgemisch bei 100°C mit 3500 ml Toluol, kühlt, saugt das angefallene Festprodukt ab und wäscht mit 1000 ml Toluol nach.
Nach Trocknung erhält man 2380 g 6H-Dibenz-[c,e][1,2]-oxaphosphorin-6-on (Schmelzpunkt: 117 bis 120°C). Aus dem Filtrat lassen sich weitere 140 g Wertprodukt (Schmelzpunkt: 117 bis 119°C) gewinnen. Insgesamt erhält man 2520 g 6H-Dibenz-[c,e][1,2]-oxaphosphorin-6-on, entsprechend einer Ausbeute von 98 % der Theorie.

### Beispiel 2 (ohne Lösungsmittel)

77,6 g (0,331 mol) 6-Chlor-(6H)-dibenz-[c,e][1,2]-oxaphosphorin werden auf 110°C erwärmt. Anschließend setzt man innerhalb von 30 Minuten unter lebhaftem Rühren 5,96 g (0,331 mol) Wasser zu. Dabei gast der anfallende Chlorwasserstoff zum Teil ab. Danach wird die Temperatur schrittweise bis 180°C erhöht und solange aufrechterhalten, bis kein Chlorwasserstoff mehr entweicht (Dauer etwa 2 Stunden). Das Reaktionsprodukt wird anschließend abgekühlt. Es erstarrt und wird zerkleinert. Man erhält 71,5 g 6H-Dibenz-[c,e][1,2]-oxaphosphorin-6-on (Schmelzpunkt: 117°C), entsprechend einer Ausbeute von 100 % der Theorie. Die Reinheit beträgt laut ³¹P-NMR-Spektroskopie 99 %, der Chlorwasserstoffgehalt liegt bei 0.08 %.

## Patentansprüche

1. Verfahren zur Herstellung von 6H-Dibenz-[c,e][1,2]-oxaphosphorin-6-on der Formel 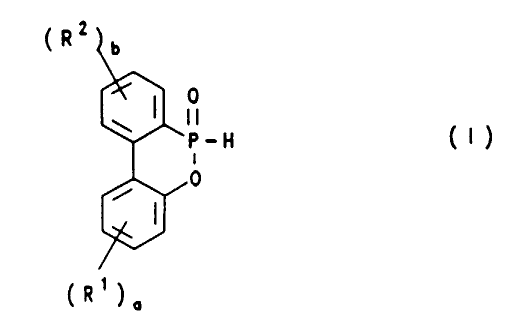 worin R¹ und R² gleich oder verschieden sind und für Halogen, eine Alkyl oder Alkoxy-Gruppe mit 1 bis 6 Kohlenstoffatomen stehen und a und b gleich oder verschieden sind und für 0, 1, 2 oder 3 stehen, dadurch gekennzeichnet, daß man ein 6-Chlor-(6H)-dibenz-[c,e][1,2]-oxaphosphorin der Formel 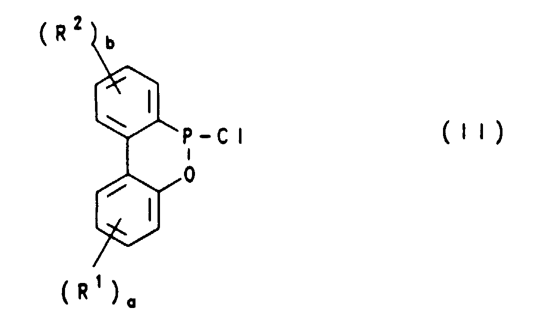 worin R¹, R², a und b die vorstehende Bedeutung haben, mit Wasser, im Molverhältnis 1:1 bei 50 bis 250°C, gegebenenfalls in Anwesenheit eines Lösungsmittels, umsetzt und gasförmigen Chlorwasserstoff in dem Maße, wie er gebildet wird, abtrennt.

2. Verfahren nach Anspruch 1, dadurch gekennzeichnet, daß R¹ und R² für Chlor, eine Alkyl- oder Alkoxy-Gruppe mit 1 bis 4 Kohlenstoffatomen stehen.

3. Verfahren nach Anspruch 1 oder 2, dadurch gekennzeichnet, daß a und b für 0, 1 oder 2, insbesondere für 0 oder 1 stehen.

4. Verfahren nach einem oder mehreren der Ansprüche 1 bis 3, dadurch gekennzeichnet, daß a und b gleich sind und für 0 oder 1, insbesondere für Null stehen.

5. Verfahren nach einem oder mehreren der Ansprüche 1 bis 4, dadurch gekennzeichnet, daß man die Umsetzung bei 70 bis 200°C durchführt.

6. Verfahren nach einem oder mehreren der Ansprüche 1 bis 5, dadurch gekennzeichnet, daß man die Umsetzung bei 100 bis 180°C durchführt.

7. Verfahren nach einem oder mehreren der Ansprüche 1 bis 6, dadurch gekennzeichnet, daß man eine aromatischen Verbindung als Lösungsmittel einsetzt.

8. Verfahren nach einem oder mehreren der Ansprüche 1 bis 7, dadurch gekennzeichnet, daß man Toluol, o-Xylol, m-Xylol, p-Xylol, Chlorbenzol, Dichlorbenzol oder Mischungen derselben als Lösungsmittel einsetzt.

## Claims

1. A process for the preparation of 6H-dibenzo[c,e]-[1,2]-oxaphosphorin-6-one of the formula 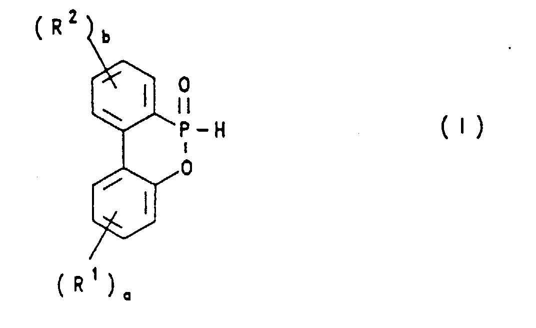 in which R¹ and R² are identical or different and are halogen or an alkyl or alkoxy group having from 1 to 6 carbon atoms and a and b are identical or different and are 0, 1, 2 or 3, which comprises reacting a 6-chloro-(6H)-dibenzo[c,e]-[1,2]oxaphosphorin of the formula 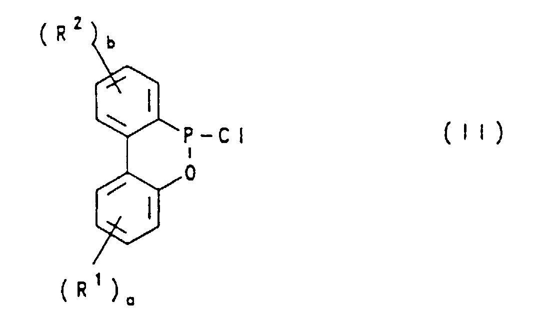 in which R¹, R², a and b are as defined above, with water in a molar ratio of 1:1 at from 50 to 250°C, in the presence if desired of a solvent, and separating off gaseous hydrogen chloride at the rate at which it is formed.

2. The process as claimed in claim 1, wherein R¹ and R² are chlorine or an alkyl or alkoxy group having from 1 to 4 carbon atoms.

3. The process as claimed in claim 1 or 2, wherein a and b are 0, 1 or 2, in particular 0 or 1.

4. The process as claimed in one or more of claims 1 to 3, wherein a and b are identical and are 0 or 1, in particular zero.

5. The process as claimed in one or more of claims 1 to 4, wherein the reaction is carried out at from 70 to 200°C.

6. The process as claimed in one or more of claims 1 to 5, wherein the reaction is carried out at from 100 to 180°C.

7. The process as claimed in one or more of claims 1 to 6, wherein an aromatic compound is employed as solvent.

8. The process as claimed in one or more of claims 1 to 7, wherein toluene, o-xylene, m-xylene, p-xylene, chlorobenzene, dichlorobenzene or a mixture thereof is employed as solvent.

## Revendications

1. Procédé de préparation de 6H-dibenz-[c,e][1,2]-oxaphosphorin-6-one de formule 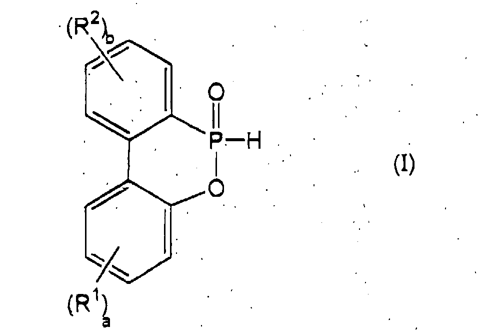 dans laquelle R¹ et R² sont identiques ou différents et sont un halogène, un groupe alkyle ou alcoxy avec 1 à 6 atomes de carbone et a et b sont identiques ou différents et sont égaux à 0, 1, 2 ou 3, caractérisé en ce qu'on fait réagir une 6-chloro-(6H)-dibenz-[c,e][1,2]-oxaphosphorine de formule : 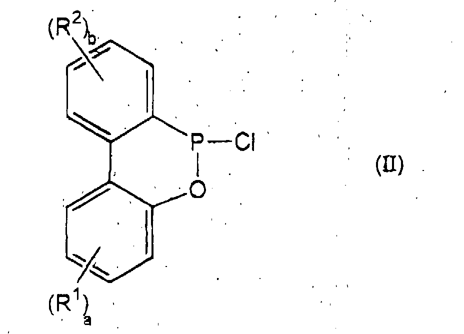 dans laquelle R¹ et R², a et b ont les significations précédentes, avec de l'eau, dans un rapport molaire de 1 : 1 de 50 à 100 °C, éventuellement en présence d'un solvant, et on sépare le chlorure d'hydrogène sous forme de gaz de la masse quand il se forme.

2. Procédé selon la revendication 1, caractérisé en ce que R¹ et R² sont le chlore, un groupe alkyle ou alcoxy avec 1 à 4 atomes de carbone.

3. Procédé selon la revendication 1 ou 2, caractérisé en ce que a et b sont égaux à 0, 1 ou 2, en particulier 0 ou 1.

4. Procédé selon l'une ou plusieurs des revendications 1 à 3, caractérisé en ce que a et b sont identiques et sont égaux à 0 ou 1, en particulier zéro.

5. Procédé selon l'une ou plusieurs des revendications 1 à 4, caractérisé en ce qu'on effectue la réaction de 70 à 200 °C.

6. Procédé selon l'une ou plusieurs des revendications 1 à 5, caractérisé en ce qu'on effectue la réaction de 100 à 180 °C.

7. Procédé selon l'une ou plusieurs des revendications 1 à 6, caractérisé en ce qu'on utilise comme solvant un composé aromatique.

8. Procédé selon l'une ou plusieurs des revendications 1 à 7, caractérisé en ce qu'on utilise comme solvant le toluène, le o-xylène, le m-xylène, le p-xylène, le chlorobenzène, le dichlorobenzène ou les mélanges de ceux-ci.
